# EUROPÄISCHE PATENTSCHRIFT

(11) **EP 4 029 132 B1**
(45) Veröffentlichungstag und Bekanntmachung des Hinweises auf die Patenterteilung: **20.08.2025**
(21) Anmeldenummer: 20765193.6
(22) Anmeldetag: 25.08.2020
(51) Int. Cl.: H02K 11/40, H02K 11/33, H02K 5/22

(54) **ELEKTRISCHE ANTRIEBSEINRICHTUNG UND ANTRIEBSANORDNUNG**
ELECTRICAL DRIVE DEVICE AND DRIVE ASSEMBLY
DISPOSITIF D'ENTRAÎNEMENT ÉLECTRIQUE ET ENSEMBLE D'ENTRAÎNEMENT

(30) Priorität: 10.09.2019 DE 102019124231
(43) Veröffentlichungstag der Anmeldung: 20.07.2022
(73) Patentinhaber: Schaeffler Technologies AG & Co. KG, 91074 Herzogenaurach (DE)
(72) Erfinder: LEHMANN, Steffen, 76275 Ettlingen (DE); TRINKENSCHUH, Andreas, 77815 Bühl (DE); BLECKMANN, Dirk, 58791 Werdohl (DE); WEIS, Dominik, 77815 Bühl (DE)
(86) Internationale Anmeldenummer: PCT/DE2020/100738
(87) Internationale Veröffentlichungsnummer: WO 2021/047717

(56) Entgegenhaltungen:
- EP-A1- 2 072 828
- EP-A1- 2 500 578
- WO-A1-2018/197473
- DE-T5- 112015 006 071

## Beschreibung

Die Erfindung betrifft eine elektrische Antriebseinrichtung sowie eine Antriebsanordnung mit einer elektrischen Antriebseinrichtung und einer Verbrennungskraftmaschine.

Es sind diverse elektrische Antriebseinrichtungen bekannt, die in Antriebssträngen bzw. Antriebsanordnungen, insbesondere für Hybridkraftfahrzeuge, eingesetzt werden. Ein Hybridantriebssystem ist beispielsweise aus der DE 11 2015 006 071 T5 bekannt.

Derartige elektrische Antriebseinrichtungen umfassen zumindest eine in einem Gehäuse angeordnete elektrische Rotationsmaschine sowie eine Leistungselektronik. Die Leistungselektronik dient der Ansteuerung bzw. der Versorgung der elektrischen Rotationsmaschine bzw. der elektrischen Rotationsmaschinen mit elektrischer Energie, wobei eine elektrische Rotationsmaschine üblicherweise als Mehrphasen-Drehstrommaschine ausgeführt ist.

Zudem umfasst die Leistungselektronik gegebenenfalls eine steuerungstechnische Schnittstelle zum Anschluss eines Steuergeräts eines Kraftfahrzeugs und/oder eine elektrische Schnittstelle zum Anschluss eines Energiespeichers, wie zum Beispiel einer Batterie. Die Leistungselektronik kann auch das Steuergerät selbst umfassen. Das Steuergerät dient zur Ansteuerung der elektrischen Rotationsmaschine bzw. elektrischen Rotationsmaschinen. Dabei können mehrere steuerungstechnische oder elektrische Schnittstellen vorgesehen sein, je nach Anzahl der anzuschließenden Einrichtungen.

Üblicherweise ist die Leistungselektronik mit ihrem Gehäuse auf einem Gehäuse einer die elektrische Rotationsmaschine bzw. elektrischen Rotationsmaschinen umfassenden Maschinen-Einheit der elektrischen Antriebseinrichtung fest angeordnet. Zwecks der Ansteuerung bzw. der Versorgung der elektrischen Rotationsmaschine bzw. der elektrischen Rotationsmaschinen ist zwischen der Leistungselektronik und der Maschinen-Einheit zumindest eine elektrisch leitfähige Verbindung, vorzugsweise jedoch mehrere elektrisch leitfähige Verbindungen, realisiert. Verbindungen zwischen Leistungselektronik und Maschineneinheiten sind z.B. für Kraftfahrzeug-Aktoren aus der WO 2018/197473 A1 und für Heizungsumwälzpumpen aus der EP 2 072 828 A1 bekannt.

Bei Stromfluss durch diese zumindest eine elektrische Verbindung kann es zur Bildung eines hochfrequenten, elektromagnetischen Feldes kommen, welches sich über die entsprechenden Gehäuse und über diese an die Umwelt überträgt.

Dieses hochfrequente, elektromagnetische Feld kann gegebenenfalls die Funktion eines Radios im MW-Bereich oder UKW-Bereich beeinträchtigen und/oder eine Störung von elektronischen Steuergeräten in einem oder in der unmittelbaren Umgebung des mit der elektrischen Antriebseinrichtung ausgestatteten Kraftfahrzeugs hervorrufen.

Um die elektromagnetische Verträglichkeit bekannter elektrischer Antriebseinrichtungen zu verbessern, werden gegenwärtig Erdungen der Gehäuse der Leistungselektronik und der Gehäuse der elektrischen Rotationsmaschine bzw. elektrischen Rotationsmaschinen realisiert.

In der Regel werden dazu separate Elemente wie z.B. Erdungskabel mit Korrosionsschutz eingesetzt. Sowohl deren Herstellung als auch die Einbringung derartiger Erdungen in eine elektrische Antriebseinrichtung ist jedoch mit einem entsprechenden hohen Aufwand verbunden.

Hiervon ausgehend liegt der vorliegenden Erfindung die Aufgabe zugrunde, eine elektrische Antriebseinrichtung sowie eine damit ausgestattete Antriebsanordnung zur Verfügung zu stellen, die kostengünstig die elektromagnetische Verträglichkeit erhöhen.

Die Aufgabe wird durch die elektrische Antriebseinrichtung nach Anspruch 1 gelöst. Vorteilhafte Ausgestaltungen der elektrischen Antriebseinrichtung sind in den Unteransprüchen 2 bis 7 angegeben. Ergänzend wird eine Antriebsanordnung, welche die elektrische Antriebseinrichtung aufweist, gemäß Anspruch 8 zur Verfügung gestellt.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft eine elektrische Antriebseinrichtung, umfassend eine Maschinen-Einheit mit einem Maschinen-Gehäuse und darin angeordnet zumindest eine elektrische Rotationsmaschine, sowie umfassend Leistungselektronik mit einem Elektronik-Gehäuse und darin angeordnet eine Steuerungselektronik. Zumindest eines der beiden Gehäuse weist wenigstens einen Vorsprung auf zwecks definierter Positionierung der Maschinen-Einheit und der Leistungselektronik aneinander bei und/oder nach der Montage. Das jeweils andere Gehäuse weist zur Aufnahme des Vorsprungs eine hinsichtlich Form und Größe komplementäre Aussparung auf. Es ist vorgesehen, dass der Vorsprung und die Aussparung ausbildendes Material zumindest abschnittsweise elektrisch leitfähig sind und der Vorsprung und die Aussparung mit einer Erdung elektrisch leitfähig verbunden sind zwecks Erdung der Leistungselektronik oder der Maschinen-Einheit.

Entsprechend ist im Sinne der Erfindung vorgesehen, dass an den zu montierenden bzw. montierten Gehäusen vorhandene Vorsprünge und Aussparungen eine Doppelfunktion erfüllen, nämlich einerseits die Erleichterung bei Montagevorgängen hinsichtlich der Durchführung definierter Relativ-Bewegungen der Gehäuse zueinander bei der Montage und der Fixierung in der letztendlichen Zielposition, wobei die beiden Gehäuse in ihren Relativ-Bewegungen mittels Vorsprung und Aussparung relativ zueinander geführt werden, und andererseits eine Erdung der Leistungselektronik und/ oder der Maschinen-Einheit. Im montierten Zustand realisieren der Vorsprung und die Aussparung eine Fixierung der beiden Gehäuse in zumindest zwei translatorischen Freiheitsgraden sowie zwei Rotations-Freiheitsgraden. Bei vorzugsweiser Anordnung von mehreren Vorsprüngen und komplementär dazu ausgeführten Aussparungen lassen sich den beiden Gehäusen alle drei Rotations-Freiheitsgrade nehmen.

Unter der Maschinen-Einheit kann im Sinne der Erfindung auch eine Kombination eines Antriebsaggregats, wie zum Beispiel der elektrischen Rotationsmaschine, mit Getriebeelementen bzw. einem Getriebe verstanden werden.

Die Leistungselektronik ist im vorliegenden Fall im Wesentlichen eine Steuerungseinrichtung zur Steuerung der Maschinen-Einheit.

Unter Steuerungselektronik im Sinne der Erfindung ist zumindest ein elektronisches Bauteil zu verstehen, üblicherweise jedoch ein System mehrerer miteinander elektrotechnisch gekoppelter elektronischer Bauelemente.

Mit einer Erdung wird im vorliegenden Fall die Kontaktierung eines elektrischen Pols, insbesondere des Minus-Puls bzw. der sogenannten Masse, mit der Karosse bzw. einem tragenden Rahmen des Kraftfahrzeugs bezeichnet.

Wenn also die Maschinen-Einheit über eine Erdung verfügt, lässt sich die Leistungselektronik über die erfindungsgemäß realisierte elektrisch leitfähige Verbindung über die Maschinen-Einheit erden.

Wenn die Leistungselektronik über eine Erdung verfügt, lässt sich die Maschinen-Einheit über die erfindungsgemäß realisierte elektrisch leitfähige Verbindung über die Leistungselektronik erden.

In einer bevorzugten Ausführungsform ist vorgesehen, dass die Maschinen-Einheit über eine Erdung verfügt und die Leistungselektronik über die elektrisch leitfähige Verbindung und die Maschinen-Einheit ebenfalls geerdet ist.

Gemäß einem weiteren Aspekt der Erfindung ist der Vorsprung am Elektronik-Gehäuse ausgebildet und die Aussparung im Maschinen-Gehäuse ausgebildet.

Der Vorsprung ist dabei insbesondere aus einem korrosionsträgen Werkstoff, wie z.B. Edelstahl, gefertigt.

Erfindungsgemäß weist der Vorsprung die Form eines Stiftes auf und die Aussparung die Form einer Bohrung auf, in der der Stift aufgenommen ist.

Das bedeutet, dass der Vorsprung im Wesentlichen eine schlanke Zylinderform aufweist, wobei die Aussparung entsprechend als schlanker Hohlzylinder ausgestaltet ist.

Entsprechend kann der Stift ein separates Element sein, wobei eine feste und elektrisch leitfähige Verbindung zwischen dem jeweiligen Gehäuse, an dem der Stift angeordnet ist, und dem Stift realisiert ist. Erfindungsgemäß ist damit jedoch nicht ausgeschlossen, dass der Stift auch ein integraler Bestandteil eines Gehäuses sein kann.

In einer ergänzenden Ausführungsform sitzt der Stift mit einer Presspassung in der Bohrung.

Die Presspassung realisiert dabei eine kraftschlüssige Fixierung zwischen dem Stift und der Bohrung.

Weiterhin ist erfindungsgemäß zwischen Stift und Bohrung eine elektrisch leitfähige Toleranzhülse angeordnet.

Eine auch Toleranzring genannte Toleranzhülse dient dazu, Abstände zwischen rotationssymmetrischen und ineinander steckenden Maschinenelementen zu überbrücken. Dabei stützt sich die Toleranzhülse federnd sowohl am Stift als auch an der Innenwandung der Aussparung ab. Die Toleranzhülse kann entlang ihrer Umfangsrichtung im Wesentlichen Wellenförmig ausgestaltet sein.

Im vorliegenden Fall dient somit die Toleranzhülse zur Positionierung des Stiftes in der Aussparung und entsprechend zur mechanischen Fixierung in den genannten Freiheitsgraden. Daneben dient die Toleranzhülse jedoch auch der Realisierung der elektrisch leitfähigen Verbindung zwecks Erdung.

Insbesondere kann vorgesehen sein, dass die Toleranzhülse zumindest bereichsweise aus Edelstahl hergestellt ist.

Gemäß einem weiteren Aspekt der elektrischen Antriebseinrichtung ist zwischen den beiden Gehäusen eine Dichtung angeordnet.

Vorzugsweise umgibt diese Dichtung den Stift radial und ist als Fluid-Dichtung ausgeführt, zwecks Verhinderung des Eintritts von Schmierstoffen aus dem Maschinen-Gehäuse in die Leistungselektronik, und/oder zwecks Verhinderung des Eintritts von Feuchtigkeit aus der Umgebung in das Maschinen-Gehäuse oder das Elektronik-Gehäuse.

Die Dichtung ist vorzugsweise als O-Ring ausgeführt. Damit ist jedoch erfindungsgemäß nicht ausgeschlossen, dass die Dichtung auch eine andere Ausgestaltung aufweisen kann.

In einer weiteren Ausführungsform sind an beiden Gehäusen Steckverbindungselemente angeordnet, die dazu eingerichtet sind, entlang einer Steckverbindungsrichtung zur Herstellung wenigstens einer elektrisch leitfähigen Steckverbindung ineinander gesteckt zu werden zwecks Realisierung einer jeweiligen elektrischen Verbindung zwischen der Maschinen-Einheit und der Leistungselektronik, wobei die Steckverbindungsrichtung parallel zur Längserstreckungsrichtung des Stiftes verläuft.

Entsprechend ist vorgesehen, dass die beiden Gehäuse bei der Montage in ihren Relativ-Bewegungen derart einander angenähert werden, dass bei der Durchführung der Montage-Bewegung stiftförmige Vorsprünge in hohlzylinderförmige Aussparungen gesteckt werden und derart die Richtung der Montage-Bewegung genau definieren. Diese Bewegungsrichtung entspricht ebenfalls der Steckverbindungsrichtung, in der die Steckverbindungselemente ineinander zu stecken sind, sodass die erfindungsgemäße Ausgestaltung der Gehäuse neben der Montage und Positionierung der Gehäuse aneinander auch die elektrische Kontaktierung erleichtert bzw. die automatisierte Durchführung der Montage ermöglicht.

Gemäß einer weiteren vorteilhaften Ausführungsform der Erfindung ist das Material des Maschinen-Gehäuses und/oder des Elektronik-Gehäuses eine Aluminium-Legierung oder eine Magnesium-Legierung.

Des Weiteren wird erfindungsgemäß eine Antriebsanordnung zur Verfügung gestellt, die eine erfindungsgemäße elektrische Antriebseinrichtung sowie eine Verbrennungskraftmaschine aufweist, wobei die Verbrennungskraftmaschine drehfest mit einem Rotor der elektrischen Rotationsmaschine gekoppelt oder koppelbar ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: eine erfindungsgemäße elektrische Antriebseinrichtung in perspektivischer Darstellung,
- Fig. 2:: ein Ausschnitt der elektrischen Antriebseinrichtung während eines Montageschritts und
- Fig. 3:: eine Schnittansicht der elektrischen Antriebseinrichtung.

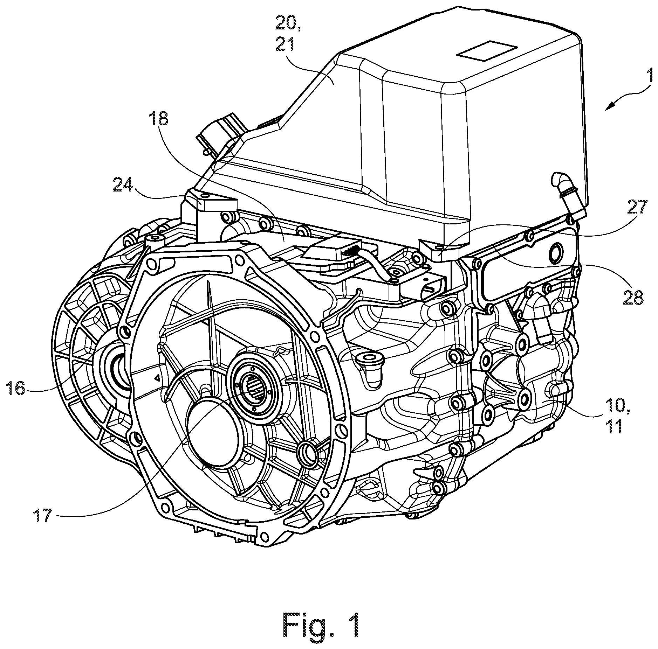

In Fig. 1 ist eine erfindungsgemäße elektrische Antriebseinrichtung 1 in perspektivischer Darstellung dargestellt.

Die elektrische Antriebseinrichtung 1 umfasst eine Maschinen-Einheit 10 sowie eine Leistungselektronik 20.

Die Maschinen-Einheit 10 weist ein Maschinen-Gehäuse 11 auf, in welchem wenigstens eine elektrische Rotationsmaschine angeordnet ist. Dies dient der Integration der elektrischen Antriebseinrichtung 1 in eine Antriebsanordnung eines Hybridkraftfahrzeugs, welches weiterhin eine Verbrennungskraftmaschine zur Realisierung verschiedener Fahrbetriebe des Hybridkraftfahrzeugs aufweist. Die Kopplung mit der Verbrennungskraftmaschine wird an der Anschlussseite 18 des Maschinen-Gehäuses 10 realisiert. Die Anschlussseite 18 des Maschinen-Gehäuses 10 ist als eine Nabe 17 mit Steckverzahnung ausgestaltet. Entsprechend lässt sich Drehmoment zwischen der elektrischen Antriebseinrichtung und der Verbrennungskraftmaschine übertragen.

Auf einer Oberseite 18 des Maschinen-Gehäuses 11 der Maschinen-Einheit 10 ist die Leistungselektronik 20 mit ihrem Elektronik-Gehäuse 21 angeordnet. Die Leistungselektronik 20 umfasst dabei in dem Elektronik-Gehäuse 21 eine Steuerungselektronik (hier nicht dargestellt) und dient im Wesentlichen der Steuerung der Maschinen-Einheit 10, wobei dazu mehrere elektrisch leitfähige Verbindungen zwischen der Leistungselektronik 20 und der Maschinen-Einheit 10 realisiert sind. Das Elektronik-Gehäuse 21 ist dabei mit einer Anschlussseite 28, welche einer Unterseite der Leistungselektronik 20 entspricht, auf der Oberseite 18 des Maschinen-Gehäuse 11 angeordnet und mit dem Maschinen-Gehäuses 11 fest verbunden. Diese feste Verbindung ist über Schraub- oder Bolzenverbindungen an einem jeweiligen Eckbereich der Leistungselektronik 20 realisiert. Das Elektronik-Gehäuse 21 bildet dazu Verbindungsflansche 27 an seiner Anschlussseite 28 aus, durch welche entsprechend Schrauben oder Bolzen hindurchgeführt und in das Maschinen-Gehäuses 11 eingeführt werden zwecks Realisierung der festen Verbindung der beiden Gehäuse 11, 21 miteinander.

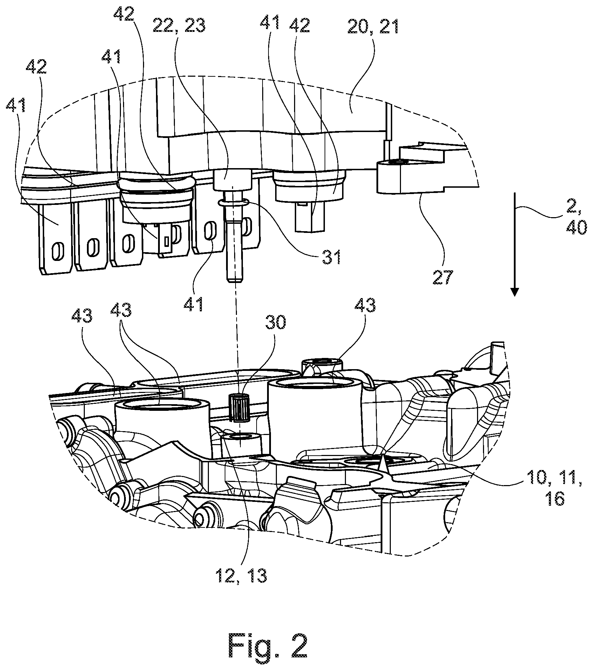

Fig. 2 zeigt einen Ausschnitt der elektrischen Antriebseinrichtung 1 während eines Montageschritts.

In dem Montageschritt wird die Leistungselektronik 20 mit ihrer Anschlussseite 28 auf der Oberseite 18 der Maschinen-Einheit 10 angeordnet. Die Darstellung der Momentaufnahme des Montageschritts zeigt die Leistungselektronik 20 in einer von der Oberseite 18 der Maschinen-Einheit 10 beabstandeten Position, wodurch ein Vorsprung 22 sowie auf vorstehenden Formelementen 42 des Elektronik-Gehäuses 21 angeordnete Steckverbindungselemente 41 auf der Anschlussseite 28 des Elektronik-Gehäuses 21 ersichtlich sind. Auf der Oberseite 18 des Maschinen-Gehäuses 11 sind eine Aussparung 12 und Formelemente 43 des Maschinen-Gehäuses 11 ersichtlich. Die Formelemente 43 des Maschinen-Gehäuses 11 sind dabei als hohlzylinderförmige und langlochförmige Aussparungen in der Oberseite 18 des Maschinen-Gehäuses 11 ausgestaltet, in welchen hier nicht ersichtliche Steckverbindungselemente des Maschinen-Gehäuses 11 angeordnet sind.

Die Formelemente 43 des Elektronik-Gehäuses 21 sind hinsichtlich ihrer Form, Größe und Position komplementär zu jeweils einem Formelement 43 des Maschinen-Gehäuses 21 ausgeführt. Die Steckverbindungselemente 41 des Elektronik-Gehäuses 21 sind als von der Anschlussseite 28 des Elektronik-Gehäuses 21 hervorstehende stiftförmige Elemente ausgestaltet.

Die Aussparung 12 weist die Form einer Bohrung 13 auf. Der Vorsprung 22 weist eine schlanke Zylinderform auf, so dass der Vorsprung als ein Stift 23 ausgestaltet ist. Der Vorsprung 22 ist zudem auch hinsichtlich seiner Größe und Position komplementär zur Aussparung 12.

Die Längserstreckungsrichtungen der Bohrung 13, des Stifts 23 und der Steckverbindungselemente 41 verlaufen dabei parallel zueinander, sodass auch eine Bewegungsrichtung 2 einer Montage-Bewegung parallel dazu erfolgt.

Bei einer Bewegung der Leistungselektronik 20 entlang der Bewegungsrichtung 2 der Montage-Bewegung auf die Maschinen-Einheit 10 zu, werden die Steckverbindungselemente 41 des Elektronik-Gehäuses 21 in die Steckverbindungselemente des Maschinen-Gehäuses 11 eingesteckt und der Stift 23 in die Bohrung 13 eingesteckt.

Eine Steckverbindungsrichtung 40, entlang welcher die Steckverbindungselemente 41 dazu eingerichtet sind, ineinander gesteckt zu werden, entspricht hier der Bewegungsrichtung 2 der Montage-Bewegung, die wiederum durch die Längserstreckungsrichtungen von Bohrung 13 und Stift 23 definiert ist. Ein ineinander Stecken der Steckverbindungselemente 40, 41 dient zur Herstellung wenigstens einer elektrisch leitfähigen Steckverbindung zwecks Realisierung einer jeweiligen elektrischen Verbindung zwischen den elektrischen Rotationsmaschinen der Maschinen-Einheit 10 und der Steuerungselektronik der Leistungselektronik 20.

Die Längserstreckung des Stifts 23 ist dabei länger als die Längserstreckung eines jeweiligen Steckverbindungselements 41 des Elektronik-Gehäuses 21, so dass der Stift 23 in dem hier gezeigten Montageschritt in die Bohrung 13 eingesteckt wird, bevor die Steckverbindungselemente 41 des Elektronik-Gehäuses 21 in die Steckverbindungselemente des Maschinen-Gehäuses 11 eingesteckt werden, wodurch der Stift 23 in der Bohrung 13 als eine Führung entlang der Bewegungsrichtung 2 der Montage-Bewegung fungiert.

Zudem ist in Figur 2 dargestellt, dass an dem Stift 23 eine Dichtung 31 in Form eines O-Rings angeordnet ist, und dass eine Toleranzhülse 30 derart radial zwischen dem Stift 23 und der Bohrung 13 angeordnet ist, dass sie beim Einstecken des Stifts 23 in die Bohrung 13 einen elektrischen Kontakt zwischen der Bohrung 13 und dem Stift 23 realisiert.

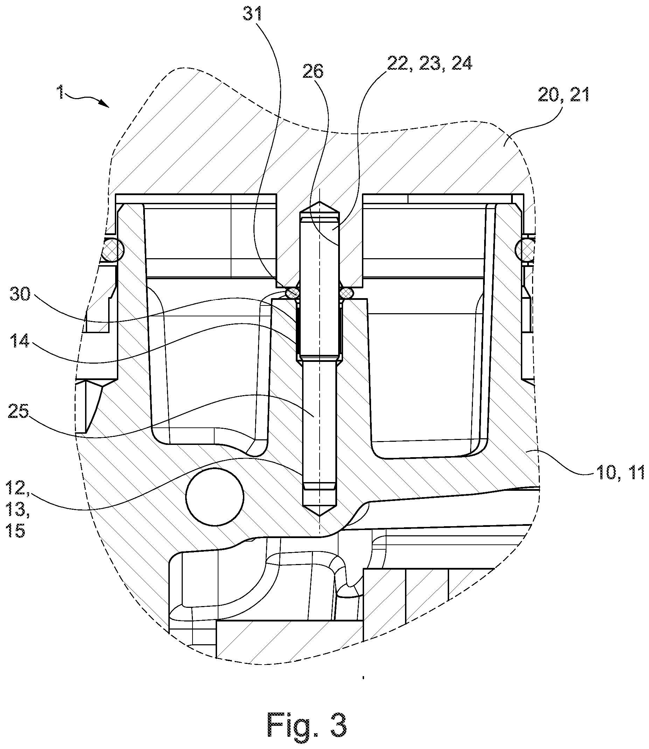

In Fig. 3 ist eine geschnittene Seitenansicht der elektrischen Antriebseinrichtung 1 gezeigt.

Die Leistungselektronik 20 ist hier an der Maschinen-Einheit 10 angeordnet und die Schnittebene verläuft parallel zur Bewegungsrichtung der Montage-Bewegung durch Bohrung 13 und Stift 23.

Ergänzend zu Figur 2 ist ersichtlich, dass der Vorsprung 22 derart realisiert ist, dass der Stift 23 als ein separates Bauteil in einer Öffnung 26 im Elektronik-Gehäuse 21 der Leistungselektronik 20 fest angeordnet ist.

Der Stift 23 umfasst dabei einen ersten Stiftabschnitt 24 und einen zweite Stiftabschnitt 25 und die Bohrung 13 umfasst einen ersten Bohrungsabschnitt 14 und einen zweiten Bohrungsabschnitt 15.

Der Durchmesser des ersten Stiftabschnitts 24 ist größer als der Durchmesser des zweiten Stiftabschnitts 25. Der Durchmesser des ersten Bohrungsabschnitts 14 ist größer als der Durchmesser des zweiten Bohrungsabschnitts 15.

Im Wesentlichen entspricht der Durchmesser des ersten Stiftabschnitts 24 dem Durchmesser der Öffnung 26. Der Durchmesser des zweiten Stiftabschnitts 25 entspricht im Wesentlichen dem Durchmesser des zweiten Bohrungsabschnitts 15. Der Stift 23 ist mit seinem ersten Stiftabschnitt 24 abschnittsweise in der Öffnung 26 im Elektronik-Gehäuse 21 angeordnet und abschnittsweise im ersten Bohrungsabschnitt 14 angeordnet. Mit seinem zweiten Stiftabschnitt 25 ist der Stift 23 im zweiten Bohrungsabschnitt 15 angeordnet.

Der Durchmesser des ersten Bohrungsabschnitts 14 ist jedoch größer als der Durchmesser des ersten Stiftabschnitts 24, wobei senkrecht zur Bewegungsrichtung der Montage-Bewegung zwischen dem ersten Bohrungsabschnitt 14 und dem ersten Stiftabschnitt 24 die Toleranzhülse 30 angeordnet ist.

Die Toleranzhülse 30 dient dazu, den Abstand zwischen dem ersten Stiftabschnitt 24 und dem ersten Bohrungsabschnitt 14 zu überbrücken und eine Positionierung sowie elektrische Kontaktierung zwischen dem Stift 23 und der Bohrung 13 zu unterstützen. Die Dichtung 31, ausgestaltet als O-Ring, ist derart auf dem ersten Stiftabschnitt 24 angeordnet, dass sie entlang der Bewegungsrichtung der Montage-Bewegung zwischen dem die Öffnung 26 ausbildenden Teil des Elektronik-Gehäuses 21 und dem die Aussparung 12 ausbildenden Teil des Maschinen-Gehäuses 11 angeordnet ist und damit die Steckverbindung zwischen dem Stift 23 und der Bohrung 13 gegen die Umgebung abdichtet.

Das den Stift 23 und die Bohrung 13 ausbildende Material ist zumindest abschnittsweise elektrisch leitfähig ausgeführt, so dass mittels dem Einstecken des Stifts 23 in die Bohrung 13 und einer damit realisierten elektrische leitfähigen Verbindung zwischen dem Stift 23 und der Bohrung 13 eine Erdung der Leistungselektronik 20 über die geerdete Maschinen-Einheit 10 oder eine Erdung der Maschinen-Einheit 10 über die geerdete Leistungselektronik 20 realisiert ist.

Mit der erfindungsgemäßen elektrische Antriebseinrichtung sowie der damit ausgestatteten Antriebsanordnung lässt sich die elektromagnetische Verträglichkeit kostengünstig erhöhen.

### Bezugszeichenliste

- 1: Elektrische Antriebseinrichtung
- 2: Bewegungsrichtung der Montage-Bewegung

- 10: Maschinen-Einheit
- 11: Maschinen-Gehäuse
- 12: Aussparung
- 13: Bohrung
- 14: erster Bohrungsabschnitt
- 15: zweiter Bohrungsabschnitt
- 16: Anschlussseite des Maschinen-Gehäuses
- 17: Nabe
- 18: Oberseite des Maschinen-Gehäuses

- 20: Leistungselektronik
- 21: Elektronik-Gehäuse
- 22: Vorsprung
- 23: Stift
- 24: erster Stiftabschnitt
- 25: zweiter Stiftabschnitt
- 26: Öffnung
- 27: Verbindungsflansch
- 28: Anschlussseite des Elektronik-Gehäuses

- 30: Toleranzhülse
- 31: Dichtung

- 40: Steckverbindungsrichtung
- 41: Steckverbindungselement des Elektronik-Gehäuses
- 42: Formelement des Elektronik-Gehäuses
- 43: Formelement des Maschinen-Gehäuses

## Patentansprüche

1. Elektrische Antriebseinrichtung (1), umfassend eine Maschinen-Einheit (10) mit einem Maschinen-Gehäuse (11) und darin angeordnet zumindest eine elektrische Rotationsmaschine, sowie umfassend eine Leistungselektronik (20) mit einem Elektronik-Gehäuse (21) und darin angeordnet Steuerungselektronik, wobei zumindest eines der beiden Gehäuse wenigstens einen Vorsprung (22) aufweist zwecks definierter Positionierung der Maschinen-Einheit (10) und der Leistungselektronik (20) aneinander bei und/oder nach der Montage und das jeweils andere Gehäuse (11, 21) zur Aufnahme des Vorsprungs (22) eine hinsichtlich Form und Größe komplementäre Aussparung (12) aufweist, wobei den Vorsprung (22) und die Aussparung (12) ausbildendes Material zumindest abschnittsweise elektrisch leitfähig ist und der Vorsprung (22) und die Aussparung (12) mit einer Erdung elektrisch leitfähig verbunden sind zwecks Erdung der Leistungselektronik (20) oder der Maschinen-Einheit (10) und
der Vorsprung (22) die Form eines Stiftes (23) aufweist und die Aussparung (12) die Form einer Bohrung (13) aufweist, in der der Stift (23) aufgenommen ist, **dadurch gekennzeichnet, dass** zwischen Stift (23) und Bohrung (13) eine elektrisch leitfähige Toleranzhülse (30) zum Überbrücken des Abstands zwischen Stift (23) und Bohrung (13) angeordnet ist.

2. Elektrische Antriebseinrichtung (1) nach Anspruch 1,
**dadurch gekennzeichnet, dass** die Maschinen-Einheit (10) über eine Erdung verfügt und die Leistungselektronik (20) über die elektrisch leitfähige Verbindung und die Maschinen-Einheit (10) ebenfalls geerdet ist.

3. Elektrische Antriebseinrichtung (1) nach einem der vorhergehenden Ansprüche, **dadurch gekennzeichnet, dass** der Vorsprung (22) am Elektronik-Gehäuse (21) ausgebildet ist und die Aussparung (13) im Maschinen-Gehäuse (11) ausgebildet ist.

4. Elektrische Antriebseinrichtung (1) nach Anspruch 1,
**dadurch gekennzeichnet, dass** der Stift (23) mit einer Presspassung in der Bohrung (13) sitzt.

5. Elektrische Antriebseinrichtung (1) nach einem der vorhergehenden Ansprüche, **dadurch gekennzeichnet, dass** zwischen den beiden Gehäusen (11, 21) eine Dichtung (31) angeordnet ist.

6. Elektrische Antriebseinrichtung (1) nach einem der Ansprüche 1 bis 5,
**dadurch gekennzeichnet, dass** an beiden Gehäusen (11, 21) Steckverbindungselemente (41) angeordnet sind, die dazu eingerichtet sind, entlang einer Steckverbindungsrichtung (40) zur Herstellung wenigstens einer elektrisch leitfähigen Steckverbindung ineinander gesteckt zu werden zwecks Realisierung einer jeweiligen elektrischen Verbindung zwischen der Maschinen-Einheit (10) und der Leistungselektronik (20), wobei die Steckverbindungsrichtung (40) parallel zur Längserstreckungsrichtung des Stiftes (23) verläuft.

7. Elektrische Antriebseinrichtung (1) nach einem der vorhergehenden Ansprüche, **dadurch gekennzeichnet, dass** das Material des Maschinen-Gehäuses (11) und/oder des Elektronik-Gehäuses (21)
i) eine Aluminium-Legierung, oder
ii) eine Magnesium-Legierung ist.

8. Antriebsanordnung mit einer elektrischen Antriebseinrichtung (1) gemäß einem der Ansprüche 1 bis 7 sowie mit einer Verbrennungskraftmaschine, die drehfest mit einem Rotor der elektrischen Rotationsmaschine gekoppelt oder koppelbar ist.

## Claims

1. An electrical drive device (1), comprising a machine unit (10) having a machine housing (11) and at least one electrical rotary machine arranged therein, and comprising power electronics (20) having an electronics housing (21) and control electronics arranged therein, wherein at least one of the two housings has at least one protrusion (22) for defined positioning of the machine unit (10) and the power electronics (20) against one another during and/or after assembly, and the respective other housing (11, 21) has a complementary cut-out (12) in shape and size for receiving the protrusion (22), wherein material forming the protrusion (22) and the cut-out (12) is electrically conductive at least in sections, and the protrusion (22) and the cut-out (12) are electrically conductively connected to an earth for the purpose of earthing the power electronics (20) or the machine unit (10), and
the protrusion (22) has the shape of a pin (23) and the cut-out (12) has the shape of a bore (13), in which the pin (23) is received, **characterised in that** an electrically conductive tolerance sleeve (30) is arranged between the pin (23) and the bore (13) for bridging the distance between the pin (23) and the bore (13).

2. The electrical drive device (1) according to claim 1,
**characterised in that** the machine unit (10) has an earth and the power electronics (20) are also earthed via the electrically conductive connection and the machine unit (10).

3. The electrical drive device (1) according to one of the preceding claims,
**characterised in that** the protrusion (22) is formed on the electronics housing (21) and the cut-out (13) is formed in the machine housing (11).

4. The electrical drive device (1) according to claim 1,
**characterised in that** the pin (23) is seated in the bore (13) with an interference fit.

5. The electrical drive device (1) according to one of the preceding claims,
**characterised in that** a seal (31) is arranged between the two housings (11, 21).

6. The electrical drive device (1) according to one of claims 1 to 5,
**characterised in that** plug-in connection elements (41) are arranged on both housings (11, 21), which plug-in elements are designed to be plugged into one another along a plug-in connection direction (40) to form at least one electrically conductive plug-in connection for realising a respective electrical connection between the machine unit (10) and the power electronics (20), wherein the plug-in connection direction (40) runs parallel to the longitudinal extension direction of the pin (23).

7. The electrical drive device (1) according to one of the preceding claims,
**characterised in that** the material of the machine housing (11) and/or the electronics housing (21) is
i) an aluminium alloy, or
ii) a magnesium alloy.

8. A drive assembly having an electrical drive device (1) according to one of claims 1 to 7 and having an internal combustion engine, which is or can be coupled in a non-rotatable manner to a rotor of the first electrical rotary machine.

## Revendications

1. Dispositif d'entraînement électrique (1), comprenant une unité de machine (10) comportant un boîtier de machine (11) et au moins une machine électrique rotative disposée en son sein, et comprenant une électronique de puissance (20) comportant un boîtier d'électronique (21) et une électronique de commande disposée en son sein, au moins l'un des deux boîtiers présentant au moins une saillie (22) permettant un positionnement défini de l'unité de machine (10) et de l'électronique de puissance (20) l'une par rapport à l'autre pendant et/ou après le montage et l'autre boîtier (11, 21) respectif présentant un évidement (12) de forme et de taille complémentaires pour recevoir la saillie (22) et le matériau formant la saillie (22) et l'évidement (12) étant électroconducteur au moins par sections, la saillie (22) et l'évidement (12) étant reliés de manière électroconductrice à la terre pour la mise à la terre de l'électronique de puissance (20) ou de l'unité de machine (10) et
la saillie (22) présentant la forme d'une broche (23) et l'évidement (12) présentant la forme d'un alésage (13) dans lequel est reçue la broche (23), **caractérisé en ce qu'**un manchon de tolérance électroconducteur (30) pour combler la distance entre la broche (23) et l'alésage (13) est disposé entre la broche (23) et l'alésage (13).

2. Dispositif d'entraînement électrique (1) selon la revendication 1,
**caractérisé en ce que** l'unité de machine (10) dispose d'une mise à la terre et l'électronique de puissance (20) est également mise à la terre par l'intermédiaire de la liaison électroconductrice et l'unité de machine (10).

3. Dispositif d'entraînement électrique (1) selon l'une quelconque des revendications précédentes,
**caractérisé en ce que** la saillie (22) est formée sur le boîtier d'électronique (21) et l'évidement (13) est formé sur le boîtier de machine (11).

4. Dispositif d'entraînement électrique (1) selon la revendication 1,
**caractérisé en ce que** la broche (23) est placée dans l'alésage (13) selon un ajustement serré.

5. Dispositif d'entraînement électrique (1) selon l'une quelconque des revendications précédentes,
**caractérisé en ce qu'**un joint (31) est disposé entre les deux boîtiers (11, 21).

6. Dispositif d'entraînement électrique (1) selon l'une des revendications 1 à 5,
**caractérisé en ce que** des éléments de liaison enfichables (41) sont disposés sur les deux boîtiers (11, 21), lesquels éléments de liaison enfichables sont conçus pour être enfichés l'un dans l'autre le long d'une direction de liaison enfichable (40) pour produire au moins une liaison enfichable électroconductrice afin de réaliser une liaison électrique respective entre l'unité de machine (10) et l'électronique de puissance (20), la direction de liaison enfichable (40) s'étendant parallèlement à la direction d'extension longitudinale de la broche (23).

7. Dispositif d'entraînement électrique (1) selon l'une quelconque des revendications précédentes,
**caractérisé en ce que** le matériau du boîtier de machine (11) et/ou du boîtier d'électronique (21)
i) est un alliage d'aluminium ou
ii) un alliage de magnésium.

8. Ensemble d'entraînement comportant un dispositif d'entraînement électrique (1) selon l'une des revendications 1 à 7, ainsi qu'un moteur à combustion interne qui est ou qui peut être couplé solidaire en rotation à un rotor de la machine électrique rotative.
